(19) **Europäisches Patentamt European Patent Office Office européen des brevets**

(11) **EP 2 720 968 B1**

(12) **EUROPEAN PATENT SPECIFICATION**

(45) Date of publication and mention of the grant of the patent:
**22.04.2015 Bulletin 2015/17**

(21) Application number: **12723644.6**

(22) Date of filing: **22.05.2012**

(51) Int Cl.:
*B65H 75/14* (2006.01)  *B23D 57/00* (2006.01)

(86) International application number:
**PCT/EP2012/059457**

(87) International publication number:
**WO 2012/171754 (20.12.2012 Gazette 2012/51)**

(54) **SPOOL FOR WINDING FINE WIRE AT HIGH TENSION WITH FLEXIBLE CORE**

SPULE ZUM WICKELN VON FEINDRAHT BEI HOHER SPANNUNG MIT EINEM FLEXIBLEN KERN

BOBINE POUR L'ENROULEMENT DE FIL FIN À UNE TENSION ÉLEVÉE PRÉSENTANT UNE ÂME FLEXIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.06.2011 EP 11170419**

(43) Date of publication of application:
**23.04.2014 Bulletin 2014/17**

(73) Proprietor: **NV Bekaert SA**
**8550 Zwevegem (BE)**

(72) Inventors:
• **DE PAUW, Stijn**
**B-9041 Oostakker (BE)**

• **VEREECKEN, Erwin**
**B-9270 Kalken (BE)**
• **SEN, Nilanjan**
**B-9000 Gent (BE)**
• **VAN HOECKE, Hendrik**
**B-8400 Oostende (BE)**

(74) Representative: **Seynhaeve, Geert Filiep**
**NV Bekaert SA**
**D.I.E.**
**Bekaertstraat 2**
**8550 Zwevegem (BE)**

(56) References cited:
**EP-A1- 1 419 986    EP-A1- 1 698 433**
**WO-A1-2009/080750    WO-A1-2011/035907**

**Description**

**Technical Field**

The invention relates to a spool, more in particular a spool for winding fine metallic wire on under high tension. The inventive spool is particularly suited to wind fine sawing wire on and more specific sawing wire with an abrasive coating. The spool has been designed to minimize wire damage, to be suitable for reuse and to form part of a wire saw machine. The invention also relates to method to design such a spool.

**Background Art**

The transport of wires of long length is exclusively done in a coiled form. For fine wire this coil - called 'wire-pack' - is wound on a carrier that can be a bobbin or a spool. In what follows the term 'spool' will be used in the understanding that it can also be substituted with synonyms such as a bobbin or a reel. A 'spool' is cylindrical in shape with an axial hole for receiving an axis or a spindle during winding or unwinding. Optionally there can be a rim or a ridge at one or both ends of the cylinder in order to enable the spool to hold more wire. Such rim or ridge will be called a 'flange' in what follows. Alternatively or additionally the function of the flange is to protect the wire on the spool from damage when the spool is rolled.

The primary function of a spool is to ease the transport of wire and to facilitate the use of the wire in the further processing of it. As metal wire - and particularly steel wire - does not extend much, does weigh considerably and has a high tensile strength, spools used in the metal wire field such as the steel wire industry are designed quite differently from spools as known in the textile yarn or optical fibre or any other industry.

More and more spools are being used for another purpose that surpasses the mere transport function namely as an essential part of a machine. While typically in the past spools were designed to just fit on a machine with a particular interface, nowadays spools start to play a role in the actual process performed by the machine. A notable example is a wire saw. In a wire saw a long length of very fine steel wire (typically thinner than 150 $\mu$m) is unwound from a spool and fed into a cutting head where - for example - silicon ingots are cut into wafers for use in the solar or semiconductor industry. The wire is fed at a tension of about 25 newton into the wire web of the cutting head. In older machinery, provisions were made to decouple the wire tension in the cutting head from the spool so that the high 25 newton tension did not transmit to the wire pack on the spool. Such provisions add to the complexity and hence cost of the machine and it is therefore a constant strive to have them eliminated (see e.g. DE 19828420).

When using a loose abrasive cutting process - i.e. a process wherein the abrasive is carried in a liquid that is poured over the wire moving in the cutting head - cutting can be performed unidirectional or bidirectional. In the unidirectional mode the wire is wound from the spool, fed through the cutting head, and collected on a heavy machine spool for discarding. As an example of such a heavy machine spool see WO 2011/035907 wherein also provisions are made to have the used wire cut from the spool. Another example is described in WO 2009/077282 where the core of the spool is made of two fitting conical parts of which the outer, wire receiving part is provided with radial compressive segments. The parts can be axially separated in order to release the used wire collected on it. In unidirectional mode the pay-off spool can be a sheet metal spool such as the one depicted in US D563207 S or US D441772 S.

Alternatively the process can be driven bidirectional. In that case fresh wire is drawn from the spool over a forward length FL in the forward direction, then the sawing direction is reversed over a backward length BL. FL is larger than BL. Therefore 'bidirectional sawing' may be called 'back- and forward sawing', 'reciprocal sawing' or 'pilgrim-mode sawing'. During the backward direction sawing used wire - soiled with abrasive - is wound back on clean wire over a distance BL. During this winding back, the tension is at cutting head tension of about 25 N or larger while typically the winding tension of the spool during production of the wire is only 3 to 5 newton. This may lead to several problems such as used wire entering between the windings of the fresh wire pack, followed by wire fracture at the moment the used wire snaps out of the fresh wire ('undercutting').

Also the spool is deformed considerably under the combination of high tension and many windings. Therefore sheet metal spools can only be used once and have to be discarded after one single use. Alternatives have been sought in the form of sturdy machined or assembled spools such as the ones described in WO 2011 /035907 or depicted in US D399857. These spools are reusable but may weigh more than the wire coil on it, making them extremely expensive in purchase and transport. The spool as described in WO 2009/080750 is in that respect a step forward in that it is lightweight and reusable for at least ten cycles.

The current attempts to eliminate the cumbersome, dirty and environmentally unfriendly loose abrasive sawing with fixed abrasive sawing further brings special requirements to the spool used. In 'fixed abrasive sawing' the abrasive particles are firmly attached to a carrier wire, and only a coolant is used in the sawing process. Usually fine diamond particles (typically 10 to 50 $\mu$m size) are used as abrasive particles. Such a wire retains its cutting action much longer as the wire does not get worn by the abrasive - the abrasive is fixed to the wire - contrary to the loose abrasive sawing process wherein the wire also wears like the piece that is being sawn. Attachment of the abrasive particles can be done by electrolytic means, by means of a resin, by means of brazing or soldering or by means of mechanical indentation. Fixed abrasive sawing wires are uniquely used in pilgrim mode where the backward length BL is only marginally less than the forward length FL. Hence the same wire length is used multiple times (easily hundred times more than in the case of loose abrasive sawing).

This implies that only very little wire is taken into the web at each cycle and used wire is wound back on itself many times before entering the wire web. For example, before a fresh length (FL-BL) of wire enters the web completely - and does not return anymore to the pay-off spool - it has been rewound BL/(FL-BL) times on the pay-off spool. This easily amounts to over 100, even 200 back windings on the pay-off spool, depending on the FL/BL ratio. Moreover the tension used for sawing has not been lessened and remains about 25 newton for wafering and is more than 70 newton in case of cropping or ingot shaping. On most sawing machines this tension is without reduction transferred to the windings on the spool.

Note that for the purpose of this application the spool from which the wire is consumed will be called the 'pay-off spool' (even though it temporarily acts as a spool on which wire is wound up i.e. receives wire) while the spool receiving the used wire will be called the 'take-up spool' (although it is intermittently used as a spool delivering wire).

To make matters worse, the abrasive particles protrude out of the wire surface (as otherwise they would not cut) and during the many backward windings wire that is on the spool and wire that arrives on the spool reciprocally damage each other which will be called the 'self-damage problem'. The problem is most severe on the pay-off side as there the wire is wound back on fresh wire that still has to be used. The wire therefore enters the web in an already damaged state. On the take-up side this problem is less severe as the wire is worn out and the abrasive has become dull: wire entering the take-up spool lands on already worn out wire. Hence the wire on the take-up spool can not harm much the wire landing on the take-up spool.

The high wire tensions used in the sawing process come directly on the wire pack of the spool during back and forth winding. This leads to undercutting of the rewound wire in the underlying soft wound wire pack and to slight tangential wire rubbing between the wires which are the mechanisms leading to self-damage. It results in scratches, indentations and missing abrasive particles.

The problem can be abated by winding the wire pack initially at high tension too - preferably at the same tension used during sawing - in order to prevent that a high tension wound wire cuts between lower laying, soft wound layers of wire. However, the winding at high tension of the wire loops cumulatively adds pressure to the wires underneath and on the spool core. Hence the spool is usually made heavy and strong to resist this immense pressure. Consequently wires that are close to the core of the spool are heavily transversally compressed under the pressure of the layers above. High tensile wires i.e. wires having a tensile strength of say larger than 3500 N/mm$^2$ are particularly fracture sensitive to this transversal pressure and certainly when they are held under tension (which is in this the case, as the wire is wound at high tension). It is therefore not surprising that such fracture can already occur in the spool. This is the 'interlayer pressure problem'.

Attempts to resolve this problem have been searched in carefully winding the wires in layers on the spools in hexagonal or square relationship (as described in EP 1698433 A1) in order to prevent point contacts and spread the contact pressure. However, given the fineness of the fixed abrasive sawing wire - typically about 150 $\mu$m - this is not easy.

Another problem is that in order to guarantee consistent winding quality over the whole spool, the core of the spool must be deformed equally over the whole width of the core. As flanges are used to carry the core, the core tends to become radially stiffer near the flanges. As a result the core tends to be restricted in diameter in between the flanges, but not at the flanges. Hence the middle part of the core will show a smaller outer diameter than at the sides, leading to winding problems during use. This problem will be referred to as the 'non-uniform core deformation' problem': the non-uniform radial deformation of the core along the axis during use.

The core deformation may lead to permanent damage during re-use of the spool: the spool core will per use cycle gradually show a permanently reduced core diameter in between the flanges than at the flanges. EP 1419986 attempts to overcome this reuse problem by using a spool wherein the cylindrical core is covered with a cover plate with a gap between cover plate and core. The purpose of the gap is to absorb the winding pressure applied on the cover plate and to prevent the core of being compressed. The inventors believe that such an approach may lead to buckling of the wire windings close to the core.

The inventors have therefore made serious attempts to overcome the above mentioned problems with the design of the spool described in what follows.

**Disclosure of Invention**

The object of the inventive spool is to overcome the problems of the prior-art in that a spool is provided that reduces or eliminates the self-damage problem, that reduces the interlayer wire pressure at least close to the core, that shows a uniform core deformation along the axis of the spool during use, that is re-usable for at least ten times, and that can be used on machines that transmit a high tension onto the wire delivery or wire receiver spool. The spool is equally useable as a pay-off spool or a take-up spool.

The spool is particularly suited to wind fine wires on at high tension. 'Fine wires' are considered to be wires with an overall diameter of less than 400 $\mu$m or 300 $\mu$m, preferably less than 200 $\mu$m such as 150 $\mu$m and 'high tension' is considered to be a tension larger than 10 N, such as 25 N up to 70 N and more. The winding occurs on production of the wire, or during the use of the wire. With the 'to wind' also 'to unwind' is implied if the context allows. The wire preferably is a sawing wire more in particular a fixed abrasive sawing wire.

As any spool the spool comprises a core whereon the fine wire is wound. Within the context of this application with 'core' is meant that component of the spool that is intended for receiving wire and that axially stretches from where the wire-pack begins to where it ends. For smooth operation this core is tubular or cylindrical with a constant outer diameter along the axis of the core.

The spool further comprises at least two (it can be three, four, five or more) supports. The supports have a centre hole for mounting the spool on any machine on which it can be used such as a winder or a wire saw. Mounting can be done by means of a spindle, pintles, an axis or by any other known means. The function of the at least two supports is to carry, to support the core, hence force is exerted by the core on the supports at least when there is a wire pack on the spool. The supports are mounted such that they contact the core internally meaning that the supports receive load from the interior side of the core during use. Hence at least a part of the support must contact the core from the interior. For example it is not excluded that the centre hole of the support is located outside the core, but that still the support carries the core from the inside. In most cases a support that is mounted substantially internal to the core will be preferred for reasons of handling and mounting. With 'substantially internal' is meant that most of the mass of the support is internal to the core for example more than half of the mass of the support.

Particular about the spool is that the supports comprise radial elastic components between the centre hole and the core. With 'elastic component' is meant any device or piece of material that returns to its original shape after having been deformed by a force (as opposed to 'plastic' where deformation is permanent). The component is elastic at least in the radial direction. By preference the support is rigid in axial direction. This in order to prevent that the centre hole would move too much when pushed in axial direction by e.g. pintles.

When wire is wound on the core, a radial pressure on the core will occur. A first layer of wire that is wound on the core will give a radial stress or pressure inward on the core (averaging out local contacting stresses). This radial pressure 'p' in N/mm$^2$ is proportional to the winding tension 'T' in newton and inversely proportional to the radius of the winding 'R' in mm and the diameter of the wire 'd' in mm:

$$p \sim T/(R \cdot d)$$

The radial pressure is therefore higher for fine wires (small 'd') wound at high tension. The radial pressure will result in a diameter reduction of the core. In state-of-the-art spools, the flanges generally act as a support to the core. As those flanges are radial stiff, they do not deform to the same extent as the core under radial pressure, hence the core will reduce more in diameter at the centre than at the flanges.

In the inventive spool, the presence of radial elastic components between core and centre hole now reduces the radial stiffness of the supports. The elastic components are designed such that the outer diameter reduction of the core at the supports is substantially equal to the outer diameter reduction of the core in between the supports at full design load of the spool. With 'substantially equal' is meant that the diameter difference at design load 'AOD' between the outer core diameter at the supports 'OD$_{support}$' and the outer core diameter in between the supports 'OD$_{core}$' is less than 0.5% of the outer core diameter 'OD$_{core}$' in between the supports. Even more preferred is if the relative difference is lower than 0.2% while the inventors achieved to keep this deviation below 0.1 %. With 'in between the supports' is meant about at the middle between two adjacent supports for example in the middle of those supports. With 'design load' is meant when the spool is filled with wire of the diameter, in the amount and at the tension it is intended to be used. In the absence of a known design load a load of 50 km of sawing wire with a nominal diameter of 148 $\mu$m at a winding tension of 25 N will be assumed. Hence, with such a design the non-uniform core deformation problem is solved.

There are a number of ways in which this deviation can be measured:

- One can measure the internal diameter of the core at the supports and in between the supports by means of an internal calliper. Adding the thickness of the core without load on it enables one to calculate the outer diameter of the core under the wire pack. The axial compression of the core wall will take up part of the diameter reduction making this measurement always equal or slightly larger than the true value of the diameter reduction.
- Alternatively a Finite Element Modeling (FEM) of the spool can be made to find out how the spool deflects under radial pressure. Such modelling can be done in Abaqus, or any other known FEM modelling software.

An alternative way of expressing that the deviation on loading at the supports should not differ too much from the deviation on loading in between the supports is by means of a 'radial modulus $k_x$' expressed in N/mm$^3$: '$k_x$' is the proportionality constant between radial deformation '$\Delta R_x$' at position 'x' along the axis of the spool and radial pressure 'p' that is understood to be axially constant (as long as the winding tension or the wire diameter does not axially vary). 'p' is equal to the pressure at design load:

$$p = k_x \cdot \Delta R_x$$

Hence,

$$\Delta OD/2 = \Delta R_{core} - \Delta R_{support} = (k_{core}^{-1} - k_{support}^{-1}) \cdot p$$

Using a cylindrical core of homogenous and isotropic core material with an equal wall thickness will lead to a constant radial modulus over the axial length of the spool. Introducing supports into such a core will lead to some difference in radial modulus at the supports than in between the supports as the supports inevitably add some radial stiffness. This will be so even if these supports comprise radial elastic components (however the axial variation in radial modulus will already be greatly reduced compared to known designs). A further step is therefore to adapt the radial modulus of the spool at the supports by reducing the radial modulus also of the core at those supports. This can be done by taking away core material at the supports.

One way to do this is e.g. to make a circumferential incision (wider than e.g. the change in diameter of the spool during use) there where the supports are. This will weaken the core locally and make the radial modulus more uniform over the axial length of the spool. Another possibility is to remove material from the core from the inside only. The core thickness will thus be reduced in the vicinity of the supports locally weakening the radial modulus of the core there that is compensated by the radial modulus of the support.

The inventors envisioned some possible radial elastic components for integration into the supports. A first possibility is to use elastomeric materials that have a lower elastic modulus than the other materials in the support. The components can be implemented as discrete elements that are radially, spoke-like arranged between core and a centre piece having a hole. Or the elastomer can be integrated as a radial thin (but axial wide) circumferential layer between core and centre piece.

Possible elastomer materials are the ones known to the skilled person such as natural rubber or synthetic based rubber such as styrene-butadiene rubber (SBR), butyl rubber (IIR), chloroprene rubber (CR), nitril rubber (NBR) or high performance rubbers such as ethene-propene (EPM, EPDM) or high performance rubbers like silicon rubbers or urethane rubbers. Alternatively some thermoplastic polymers like polyolefins and thermoplastic polyurethanes are useful for this purpose. Proper care should be taken to have a good adhesion between centre piece and core by using appropriate primers.

Alternatively said elastic components can be based on mechanical springs. 'Mechanical springs' are elastic components with a geometry wherein displacement is resisted by bending moments and/or torsion moments induced in the material the springs are made of.

In a preferred embodiment with mechanical springs, the springs are oriented rotational symmetrically in the support. At least the springs must be mounted with rotational symmetry of order three: three springs are mounted in the support with period 120°. Of course higher order symmetry such as 4, 5, 6, 7 or, in general N-fold symmetry is preferred to increase the circumferential uniformity on the core at the position of the support. The inventors tested embodiments with a 12-fold symmetry. Odd orders of symmetry are somewhat preferred because they lend themselves better to casting of the support. The fact that every spring does not face a radial opposed spring helps in order to maintain uniformity during cooling down.

A particular way of implementing this symmetry is by using 'spokes' in the support in between the centre piece with the centre hole and the core. Those spokes can take the form of blade springs, or helicoïdal springs, or any other suitable geometry of springs.

The case of infinite rotational symmetry or circular symmetry is particularly preferred. The support remains identical under any rotation angle. In that case the bending plane of the spring comprises the spool axis.

By preference the mechanical springs are obtained by milling the spring geometry out of a single piece of material (e.g. in the case of spokes). More preferred is - in the case of circular geometry - to turn out the mechanical springs on a lathe out of a single piece of material. Such springs are called 'integral' to the support: the spring is one with the support. Such integral springs have the advantage that the mechanical springs must not be mounted between core and centre piece. There are no issues of fixation of the spring.

The number of supports is at least two. The axial position of the supports can be chosen such as to limit the radial compressing of the core over the axis. For example in case of three supports the supports can be mounted at positions 1/4th, 2/4th, 3/4th of the axial length of the core. If there are just two they are by preference mounted at either end of the core. Possibly they support the core internally at either end of the core or up to about 1/3rd of the axial length of the core to the edge.

As mentioned before it is advantageous to add flanges to the side of the core. The 'flange' is that part of the cylinder that is not covered by wire, or is not intended to be covered by wire (the remainder of the cylinder being defined as the core). In certain cases a 'zero-flange' design i.e. a design where the outer diameter of the flange is equal to the outer diameter of the core may be advantageous. In that case the flange may still differ from the core for example in material, but alternatively it can also be integral with the tubular core i.e. the core part continues without interruption but is not intended to receive wire at the flange part.

A non-zero flange i.e. a flange that forms a rim at an end of the spool is more preferred as it allows to put a larger amount of wire on the spool by gradually winding layers of wire on top of each other, thus forming a 'wire pack'. However, increasing the thickness of the wire pack will increase the radial core pressure and also the interlayer pressure between wires. It is therefore important that flanges should not extend too much out of the core. In the experience of the inventors, flanges should have an outer flange diameter that is larger or equal to the outer diameter of said tubular core and are smaller than 1.3 times the outer diameter of said tubular core.

Of course the presence of a flange will increase the radial stiffness of the spool in the vicinity of that flange, and must be compensated in order to prevent an uneven deformation of the core. This can be done by removing some material from the core near the flanges for example by a circular incision in the side of the core or by removing material from the interior of the core. Another possibility is to make radial cuts in the flange to weaken the hoop stresses (the circumferential stresses) that give the flange its radial stiffness.

Alternatively, in the flanges radial elastic components can be integrated in much the same way as this is done for the supports in order to prevent that the radial stiffness of the flange is transferred to the core. Another possible solution is to have tangential elastic components in the flange. One can for example fill up the mentioned radial cuts with the resilient materials mentioned before.

The spools and supports are made of materials that are fit for the purpose. Not only technical criteria (E-modulus, yield strength, specific weight) will therein play a role but also material's prices and availability. Metals are of course the choice of preference and more in particular steels such as - in order of increasing preference - plain carbon steel, stainless steels, high strength steels. Because of the higher elastic modulus of steels, higher yield strengths are preferred to achieve a certain amount of elastic flexibility at less weight. The steel can optionally be hardened and is preferably obtained in the form of tube. For example not hardened 42CrMo4-V and 34CrNiMo6-V (WerkstoffNr. 1.6582.05) tube steel or hardened tube material such as 100CrMo7-G (hardened to HRC47, WerkstoffNr. 1.3537) are considered prefered compositions. Another alternative is to use cast iron, making the formation of the supports somewhat easier.

A good alternative - at least in terms of specific weight - are aluminium alloys. Preferred alloys are wrought aluminium alloys of the 6000 series comprising magnesium and silicon such as 6061-T6, 6082-T6 or from the 2000 series comprising copper and magnesium such as 2024-T3 or 2024-T351. Denomination is according the International Alloy Designation System (IADS), the T suffix indicates the kind of post treatment. Another advantage of aluminium alloys is that certain compositions can easily be cast such as A02010-T7, A07710-T5, T52, T6, T71 that are preferred examples. In any case aluminium alloys - be it wrought or cast - with a yield strength above 200 N/mm$^2$ are preferred.

Still other alternatives are plastic materials such as technical polyamides (Ertalon®) or acrylonitril butadiene styrene (ABS) and composite materials such as glass fibre reinforced composites. One of the inventors finds wood a good alternative in terms of strength overweight ratio.

Also a 'hybrid' design wherein the core of the spool is made of metal (such as the steels or aluminium alloys mentioned) and the supports are made from plastic materials are also very well possible and even preferred as the lower modulus of the plastics help to have easily compressing supports. The other way around - core in plastic, supports in metal - is also possible put somewhat less preferred.

According a further inventive aspect a spool is provided for winding fine wire at high tension that comprises a tubular core made of a core material for receiving the fine wire on. The core material has a modulus of elasticity - also known as Young's modulus - '$E_{core}$'.expressed in N/mm$^2$. The core is a tubular core or more preferred a cylindrical core with an inner diameter 'ID' and an outer diameter 'OD' both diameters being expressed in mm. The OD, ID and $E_{core}$ are selected such that they satisfy the inequality (the 'flexibility criterion'):

$$3 \text{ N/mm}^3 < E_{core} \times (2/ID - 2/OD) < 300 \text{ N/mm}^3$$

Even more preferred is if borders of the inequality are:

$$10 \text{ N/mm}^3 < E_{core} \times (2/\text{ID} - 2/\text{OD}) < 100 \text{ N/mm}^3$$

In the very particular case that a wire pack of 50 km of 148 $\mu$m sawing wire is wound on the spool with a tension of 25 N, the following boundaries have been found to be specifically suitable.

$$30 \text{ N/mm}^3 < E_{core} \times (2/\text{ID} - 2/\text{OD}) < 60 \text{ N/mm}^3$$

As mentioned one of the objectives of the inventors was to solve the self-damage of wires occurring when winding fixed abrasive wires on spools. One of the causes of this self-damage is that the radial pressure in the wire pack builds-up with the number of layers that are wound on the spool i.e. the interlayer pressure problem. In order to reduce this pressure the inventors went for a compressible core, rather than an incompressible core that is the standard for this kind of spool. The degree of compressibility is again expressed with the 'radial modulus $k_x$' wherein 'x' indicates the axial position along the core. It will be assumed for now that $k_x$ does not vary axially and is equal to 'k'.

From the theory of elasticity it is known that for a thick walled tube with modulus of elasticity '$E_{core}$'- in this the core of the spool is regarded as a tube - the reduction in outer radius '$\Delta R_o$' under an outside, inward directed radial pressure 'p' is well described by:

$$p = \frac{E_{core}}{g} \cdot \frac{\Delta R_o}{R_o} = k \cdot \Delta R_o$$

with 'g' being equal to:

$$g = \frac{(1+v)R_i^2 + (1-v)R_o^2}{R_o^2 - R_i^2}$$

'$R_i$' is equal to 'ID/2', '$R_o$' is equal to 'OD/2', and 'v' is the Poisson-ratio for the material (that is for most metallic materials close to 1/3). If the 'OD' of the core is more than 10x the wall-thickness ($R_o$-$R_i$) of the core, the radial modulus can be approximated to sufficient precision to:

$$k = \frac{E_{core}}{gR_o} \approx E_{core}\left(\frac{1}{R_i} - \frac{1}{R_o}\right) = E_{core} \times (2/\text{ID} - 2/\text{OD})$$

Hence the radial modulus of the core must be situated between the previously mentioned borders. As the exact formula for the radial modulus 'k' is always smaller or equal (i.e. when the thin wall condition is met) than the approximated formula, the limits for 'k' with approximated formula are more restrictive.

The inventors found that if one reduces the radial modulus 'k' outside out of what is generally accepted in the field, the interlayer radial pressure between the wires in the pack greatly reduces (by a factor of 5 or more). As the wire layers cumulatively add radial pressure during winding, the wire interlayer pressure at the core of the spool (where the pressure is expected to be largest) can be immense (the wires are wound at high tension and are fine). This pressure can be reduced by allowing the core of the spool to compress, thereby reducing hoop tension in the wires, and thus also the interlayer pressure. Hence one of the ways to reduce the interlayer pressure is to have a low radial modulus 'k'. The inventors found that this 'k' should at least be less than the above mentioned values (below 300, even better 100, or even below 60 N/mm$^3$). Any reduction in interlayer wire pressure has a positive effect on the self-damage problem, hence the selected window for 'k' greatly reduces self-damage of the wire.

Too low values for 'k', such as lower than 3, should be avoided, because such low values will lead to too high compressive stresses on the wire close to the core of the spool and can even lead to buckling of the wire. A buckled wire results in a plastically deformed kink in the wire that can not be stretched out any more and such kinks are not allowable in the sawing operation.

The above considerations assume that the material remains elastic at all stresses which is of course not the case in reality. Hence, the deformation of the spool should not be such that the material should go into plastic deformation during use. Therefore the inventors propose the following limit to the 0.05% offset yield stress 'Y_{core}' (expressed in $N/mm^2$) of the core material (the 'yield stress criterion'):

$$2400 \text{ N/mm} < Y_{core} \cdot (OD^2 - ID^2)/(4OD)$$

or even:

$$2500 \text{ N/mm} < Y_{core} \cdot (OD^2 - ID^2)/(4OD)$$

whereby larger values such as 3000 N/mm or 5000 N/mm or 10000 N/mm are not excluded but will run into conflict with the flexibility criterion.

The 'yield stress' or 'elastic limit' of a material is that stress beyond which permanent deformation can be observed after the stress has been removed. As in high strength steels and aluminium alloys, the yield stress is not easily definable, one uses the definition of a '0.05% offset yield stress' (in $N/mm^2$): when a material is stressed beyond this limit, a permanent deformation in excess of 0.05% will be observed after all applied stress has been removed. This '0.05% offset yield stress' is equal to the '$R_{p0.05}$' definition of a 'proof strength, non-proportional extension' to 0.05% as per ISO 6892:1198(E) *Metallic materials - Tensile testing at ambient temperature',* section 4.9.3. Of course not only the yield strength of the material will limit the amount of pressure a core can sustain, but also its geometry (given by OD, ID). All three combined together define the spool best suited to wind fine wire if the yield strength criterion above is met. A spool meeting this yield strength criterion can be used repeatedly without substantial plastic deformation. The inventors conjecture that at least ten re-uses of the spool are possible thereby solving the reuse problem..

A further way to alleviate the interlayer pressure is to increase the outer diameter OD of the core. The larger the core diameter the lower the pressure is the wires exert on the core. Selecting a large OD reduces the thickness of the wire pack (given a certain fixed length of wire). Thin wire packs give less accumulation of radial wire stress on the core and hence result in less interlayer pressure. Over and above a larger OD means that the wire pack also has less curvature, and it is this curvature that generates the interlayer pressure.

Over and above a larger diameter also reduces the number of windings of the wire back on the spool. The number of back windings is equal to BL/nOD (or lower as the wire pack also has a certain thickness). Hence, the chances for self-damage are less, as the wire lands less times on the wire on the spool than with a smaller diameter. Therefore, by preference, the outer diameter of the spool is larger than 250 mm, preferably more than 300 mm.

The preferred materials for making the core are steel or aluminium alloys. When steel is used the steel should have a modulus of elasticity $E_{core}$ that is larger than 190 000 $N/mm^2$ and should have a 0.05 % offset yield stress $Y_{core}$ that is larger than 350 $N/mm^2$. When an aluminium alloy is used, one should select an alloy with a modulus of elasticity $E_{core}$ that is larger than 65 000 $N/mm^2$ and a 0.05% offset yield stress $Y_{core}$ that is larger than 200 $N/mm^2$.

The spool can further be equipped with at least two supports as described in the first aspect of the invention. The supports contact the core internally and have a centre hole for receiving a spindle when mounting the spool on a winder or a wire saw. By preference the supports comprise radial elastic components between the core and the centre hole.

Furthermore the radial components and the core are adapted to one another in that the outer diameter reduction of the core at the supports is substantially equal to the outer diameter reduction of the core in between the supports. Special measures must be taken in order to compensate for the presence of the supports in that the core radial compressibility modulus must be weakened at the supports. This can be achieved by removing core material in the vicinity of the supports to weaken the core locally. Possibly this can be done by making a circumferential incision in the core at the supports. Alternatively the thickness of the core can be reduced locally by removing outside or inside core material, the latter being the preferred way.

A spool designed according the principles of the first and second aspect of the invention is dedicated to wind fine wire on at high tension. Therefore - according a third aspect of the invention - a spool comprising a coil of wire is described with following features: A spool comprising a coil of wire wound on the core of said spool, said wire having a cross sectional area 'A' in mm square; said wire being wound on said spool with a tension 'T' in Newton, such that the tensile wire stress T/A is in excess of 1000 $N/mm^2$ in the outer windings of said coil characterised in that the wires closest to the core have a tensile stress lower than 80% of the tensile wire stress T/A in the outer windings of said coil..
Preferably the radial pressure on the core of said spool exerted by said wire is less than 40 MPa.
Preferably the wire that is in contact with said core does not buckle.
By preference this wire is a sawing wire and in particular a fixed abrasive sawing wire. This inventive aspect will be further detailed in what follows:

The wire has a cross sectional area 'A' in $mm^2$. With 'cross sectional area' is meant that part of the cross section of the wire that carries the load on the wire. In the case of a sawing wire having a metal core wire with or without metallic coatings (such as copper or nickel) containing or not containing abrasive particles, it is understood that the total metallic area is meant (inclusive any metallic coatings). The wire is wound with a tension force 'T' in newton that is kept constant during winding. The combination of tension and area must be so that a tensile wire stress T/A larger than 1000 N/mm$^2$ is present on the wire when wound on the spool.

A benchmark load - for the purpose of this application - is the winding of 50 km of sawing wire having a nominal diameter of 148 $\mu$m at a tension of 25 N. Hence in the wire there is a tension of 1450 N/mm$^2$ when the wire goes onto the spool.

Due to the design of the spool the tension in the lower laying windings of the wire will gradually diminish as more and more layers are wound on the spool. Indeed due to the inventive selection of materials and dimensions of the spool, the wire tension of the wire windings will compress the core of the spool in a controlled way. Due to the diameter shrink of the core, the tension in the wires will reduce leading to a reduced interlayer pressure and hence less damage to the wire. Intuitively it is clear that the wire stress of windings closest to the core will be the lowest as they benefit the most of the cumulative shrink during winding. The outer windings will show the highest stress namely the stress as received during winding i.e. T/A.

The stress in the wires closest to the core have a tensile stress lower than 80% of the tensile stress in the outer windings. Even better is less than 70%, or lower than 50%. Actually the tensile stress can even reverse sign i.e. turn into a compressive stress for wires close to the core. This is not a problem as long as this compressive stress is not larger than about 1000 N/mm$^2$. Above this level of compressive stress buckling of the wire can occur which should be avoided as this results in permanent kinks of the sawing wire.

The wire stress in the outer windings can be measured as follows: the spool with the coil of wire is mounted rotatable on a stand. A fine marking line parallel to the axis is made on the wire pack. A length of wire (several meters e.g. 25 meters, to at least 3 cm precise, called measuring Length L) is manually and straight pulled from the spool at low tension. The end of wire is carefully rewound on the wire pack at approximately the same axial position at no tension. The displacement of the mark on the wire relative to the mark on the wire pack is compared. As the wire will have shortened (if it was under tensile load), the mark on the wire will end before the mark on the wire coil. This displacement '$\Delta$L' is measured. Out of the relative change in length $\Delta$L/L and by means of a stress-strain diagram of the wire, the stress on the wire at the outside of the wire pack can be found.

The tension close to the core is best derived from measuring the inner diameter of the core before uncoiling the spool and after uncoiling the spool. The relative change of the inner diameter is a measure for shortening of the wire close to the core due to the compression of the core. Again the change in stress can be derived through a stress-strain diagram of the wire. This change in stress should be more than 20% of the tensile stress in the outer windings. If the spool core deforms plastically under the coil, this change is less than that i.e. the spool with wire coil will fall out of the claim.

The inventors have found that by preference the radial pressure must be less than 40 MPa in order not to have wire damage. Even more preferred is if it is lower than 30 MPa or even lower than 20 MPa. This can be derived by simulating the behaviour of the spool after measuring the geometry and determining the material properties and after analysing the wire in terms of wire tension, wire length, diameter and tensile properties.

It will be clear from the above that not only a spool is disclosed but a whole methodology on how a spool must be designed for specific sawing wire coils (diameters, tensions). This is the fourth aspect of the invention: a methodology to design sawing wire spools.

The method comprises the steps of:

- Selecting a core material for the core of a spool. The core material will have a modulus of elasticity '$E_{core}$' expressed in N/mm$^2$;
- Selecting a core with an inner diameter 'ID' and an outer diameter 'OD' expressed in mm. Preferably one first sets the outer diameter of the spool in terms of the different restriction that can be of importance such as:

  - The space available in the spool winder and/or in the sawing machine. Clearly there will be an upper limit to the outer diameter of the core.
  - The amount of wire one wants to collect on the wire. The larger the outer diameter, the more wire goes into the same wire pack thickness.
  - Other limitations such as availability of materials, transport, weight of the spool etc.

For example one can start with an outer diameter of at least 250 mm.
- Finally one selects the inner diameter such that
3 N/mm$^3$ < $E_{core} \cdot$(2/ID-2/OD) < 300 N/mm$^3$

Although the method has been described in a specific order, this order is not limitative. For example:

- one can start by selecting the material, and then specify the inner diameter ending up with a certain range for the outer diameter, or
- one can start with an inner and outer diameter and find a material that fits the radial compressibility requirement. Whenever any one of the above methods is followed, one will obtain a sawing wire spool with in an optimum core wire stress in combination with a low interlayer stress.

In a further refinement and complication, one can also include the 'yield stress criterion' making the selection even more specific. If the 'yield stress criterion' is met, the spool shows good re-usability.

## Brief Description of Figures in the Drawings

FIGURE 1 'a' and 'b' shows an empty and full prior-art spool wherein the problem of the compressed core is illustrated.
FIGURE 2 'a' and 'b' shows an empty and full inventive spool wherein the principle of the first aspect of the invention is explained.
FIGURE 3 'a' shows an inventive spool with a circular symmetry.

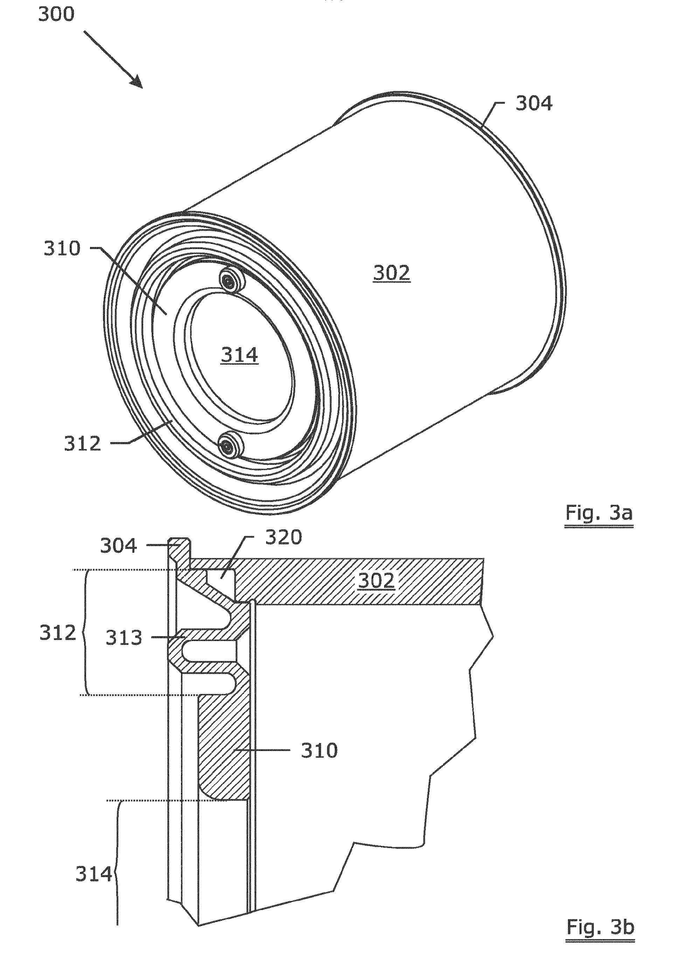

FIGURE 3 'b' shows a detail of the radial elastic support in the spool.

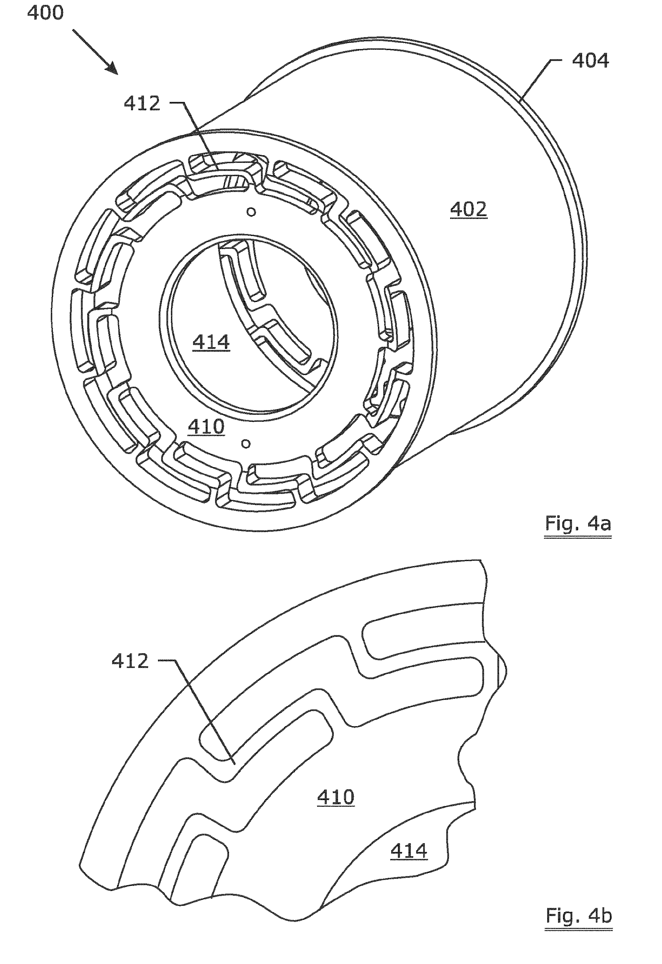

FIGURE 4 'a' shows an inventive spool with a 12-fold rotational symmetry.
FIGURE 4 'b' shows a detail of the radial elastic support in the spool.

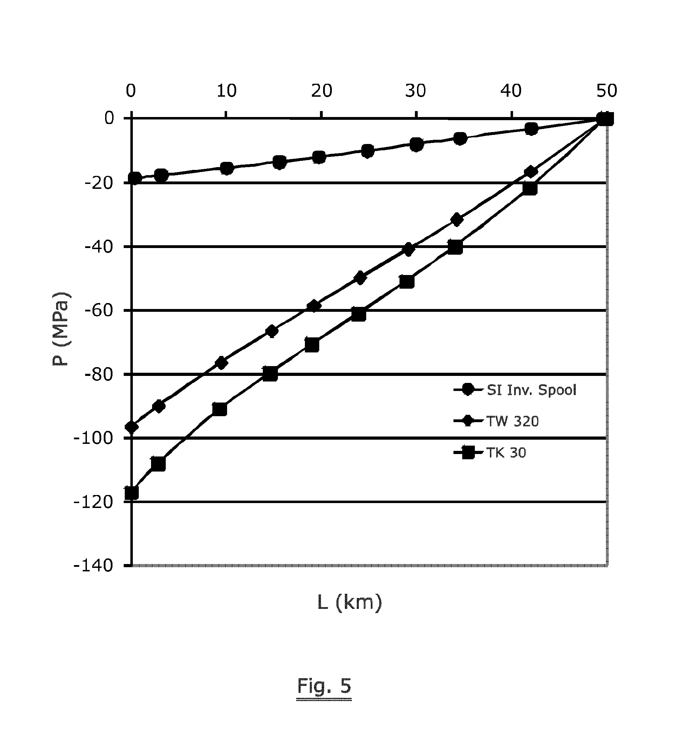

FIGURE 5 shows how the interlayer pressure between wire layers is depending on the depth in the wire pack for different spools compared to the inventive spool.

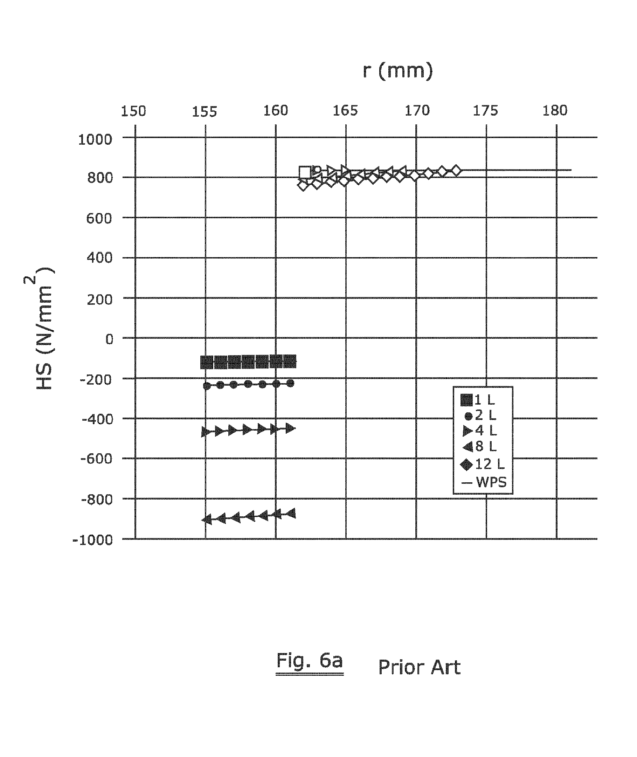

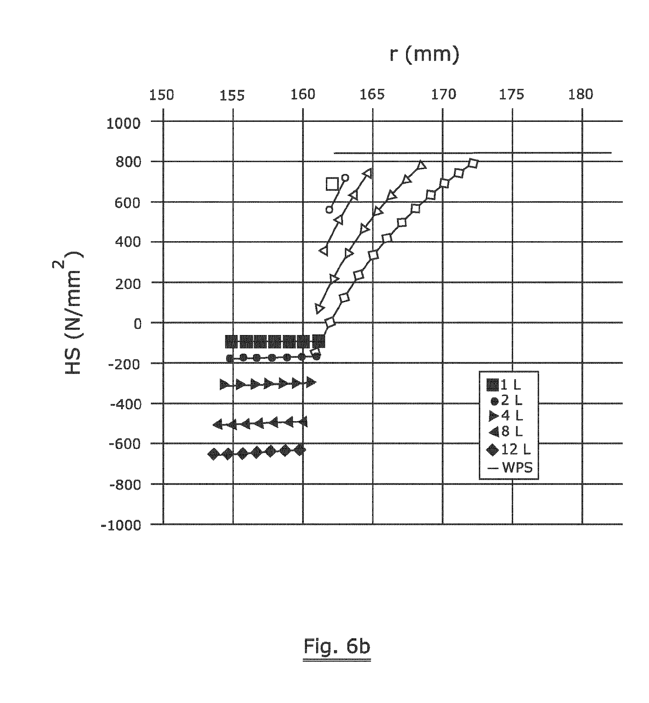

FIGURE 6 shows schematically how the hoop stress changes in the wire pack and in the spool during winding in a prior-art spool (a) and the inventive spool (b).

## Mode(s) for Carrying Out the Invention

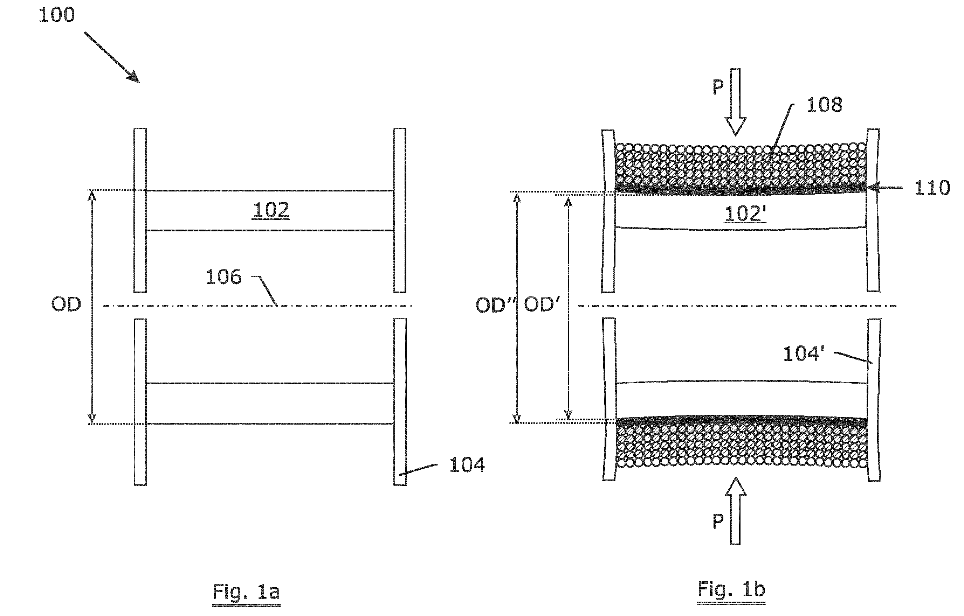

FIGURE 1 'a' shows a prior-art spool 100 with a core 102 with flanges 104 at either end. The core has an outer diameter indicated with 'OD' and a centreline 106. After winding the spool is provided with a wire pack 108 of fine wire wound at high tension. Due to the fineness of the wire and the high tension a radial pressure 'P' is exerted by the wires and transmitted to the core of the spool. Wires 110 close to the core receive the accumulated pressure of all wire windings wound on top of them. The degree of grey shade indicates the increasing radial pressure. Due to this pressure, the core 102 is deformed to core 102'. The core shows an outer diameter OD' in between the flanges that is more compressed than the outer diameter OD" at the flanges. Also the flanges 104' tend to deform and bulge outwardly due to the pressure exerted by the wires on the flange. Such a spool shows a low re-usability and leads to unwinding problems due to the deformation of the core. The tension in the wire at the outer windings is maximal and equal to the winding tension. The wire tension in the wire pack will decrease depending on the compression behaviour of the core.

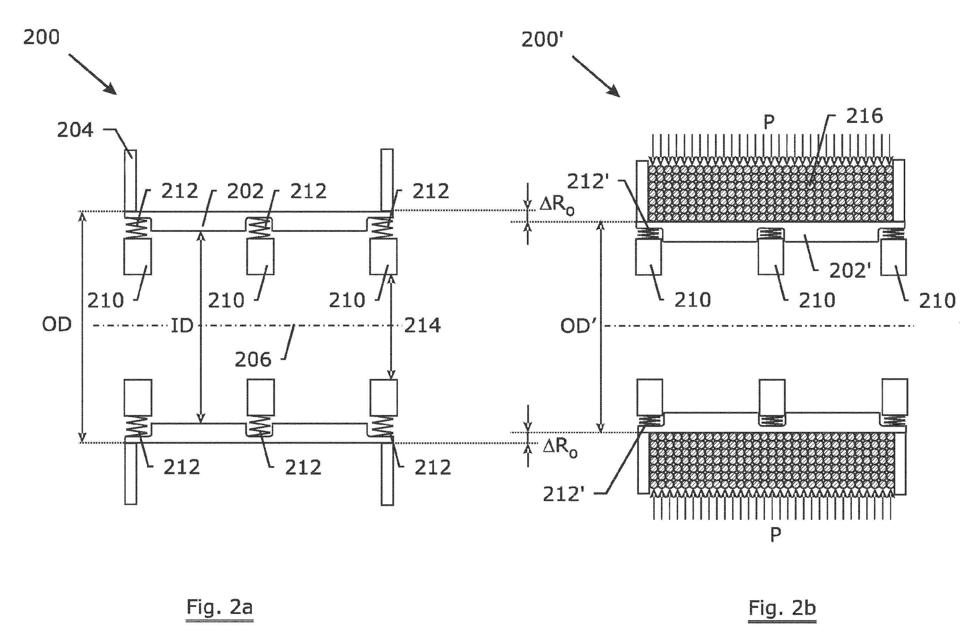

FIGURES 2 'a' and 'b' show a generic representation of the empty 200 and full 200' inventive spool. Again a core 202 with outer diameter 'OD', flanges 204 and a centreline 206 can be identified. The spool is provided with supports 210 that internally support the core 202 of the spool 200 and have a centre hole 214 for receiving an axis or spindles during winding or unwinding. Characteristic about the spool is that radial elastic components 212 - here represented by springs - are present between the core and the support. Furthermore, core material has been removed from the core in the vicinity of the supports 210 in order to compensate for the presence of the supports.

When now a wire pack 216 of fine wire under high tension is wound on the spool, the core 202' compresses radial and the outer diameter of the spool reduces to OD' resulting in a diminishing of the radius of $\Delta R_o$. The construction of the spool is such that the core shrinks uniform over the whole axial length of the spool. I.e. the reduction in diameter at the supports 210 is substantially equal as the reduction in diameter in between the supports.

FIGURE 3 describes a first preferred embodiment of the invention: 'a' is a perspective view of the spool while 'b' shows a detail of the support in cross section through a plane comprising the axis. The spool 300 basically consists of a core 302, and two supports 310 at either end of the core 302. The supports 310 support the core 302 internally and have a centre hole 314 for mounting the spool. The core has an outer diameter OD of 327 mm and an inner diameter ID of 293 mm hence has a wall thickness of 17 mm. The core is made of aluminium alloy 6082 T6 with a modulus $E_{core}$ of 70000 N/mm$^2$ and 0.05% offset yield stress of 260 N/mm$^2$.

The support has an elastic component 312 with circular symmetry. The elastic component 312 shows a Z-shaped ridge 313 that bends under the pressure exerted by the core on the support when fine wire under high tension is wound on the spool. This bending is elastic and when the spool is unwound the ridge reverts back to its original shape.

The ridge 313 has been milled out of a single piece of aluminium alloy disc. Hence the elastic component is integral to the support. The aluminium alloy used for the support piece was also of the type 6082 T6. The support also incorporates a small flange 304 of height 7.5 mm.

In order to compensate for the radial modulus of the support (inclusive the flange) the core 302 must be less compressive there where the supports are. In this embodiment this is realised by removing some material from the core at 320. At the supports the core thickness is reduced to 4 mm. The removal of this material results in reduced core radial modulus at the support which is just compensated by the increment of radial modulus by the presence of the support 310 and the presence of the flange 304.

50 km of sawing wire with a nominal diameter of 148 $\mu$m was wound on this spool with a tension of 25N. This resulted in an outer diameter change of the core of 0.78 mm (measured from the inside). The internal core diameter difference at the supports compared to in the middle of the supports was less than 0.1 mm with the wire pack on i.e. relative to the OD of 327 mm, the axial variation in core diameter with the wire pack on is only 0.03 %.

In FIGURE 4 'a' an alternative embodiment 400 of the inventive spool is shown in perspective, while 'b' shows a detail of the elastic components of the spool in a cross section with a plane perpendicular to the axis. The overall dimensions of the spool are identical to that of the first embodiment. In this embodiment, the elastic components are spokes 412 integral to the support 410 with central hole 414. The twelve angularly regularly arranged spokes give the support a 12-fold rotational symmetry. The S-shaped spokes give an elastic support of the core of the spool and return completely to their original position after the load has been removed. The supports were milled out of a single piece of polyamide (Ertalon®, 6XAU+).

Table I summarises the different properties of the inventive spool (Inv. Spool) according the first embodiment with the existing spools as available in the market. All spool were of aluminium make for which the properties of the type type 6082 T6 were used with a modulus of 70 000 N/mm$^2$ and a yield stress of 260 N/mm$^2$. There are the columns headed with 'OD' the outer diameter of the core, 'ID' the inner diameter of the core, 't' the wall thickness of the core, 'Spool width' i.e. the length of the core obtained by actual measurements on the spools themselves.

The columns 'Wire-pack thickness' i.e. the radial height of a wire pack of 50 km of sawing wire of 148 $\mu$m nominal diameter at tension of 25 N, 'Pressure on core' i.e. the radial pressure exerted by the wire pack on the core, '$\Delta$OD' the change in outer diameter with or without wire pack on the spool, 'k numeric' i.e. the radial modulus are all the result of numerical simulations.

The columns 'k exact' is the result of the 'thick wall' radial modulus calculation based on $R_o$, $R_i$ and $E_{core}$. 'k approximate' is the result of the 'thin wall' approximation. Notice that 'k exact' is always larger than 'k approximate'. However, when the wall thickness is less than about ten times the outer diameter (t < 10×OD) the results converge. The 'Yield criterion' is the result of the calculation:

$$Y_{core} \cdot (OD^2 - ID^2)/(4OD)$$

Table I illustrates the following points of the invention:

- The increased OD results in the lowest wire-pack thicknesses of all spools. Low wire-pack thicknesses lead to low interlayer wire pressure and low core pressures.
- Indeed, the pressure on the core i.e. also the pressure that the lower laying layers of wire close to the core experience are the lowest of all spools: 18.9 MPa. FIGURE 5 is in this respect illustrative: it shows the radial pressure of the wires in the wire pack as a function of the length of the wire (0 length at the core, 50 km at the outer windings). The pressure at the outside of the pack is obviously zero as no other wires push on these layers. The absolute pressure is highest at the core of the spool. When compared to the TW320 or the TK30 spools the interlayer pressure at the core is at least 5 times smaller. This pressure should preferably be lower than at most 40 MPa.
- Due to the elastic design of the spool, the wire pack will result in the largest deformation of the core compared to all other spools. Indeed, the outer diameter decreases with 0.78 mm when the wire pack is wound on it.
- This increased deformation is due to the low radial modulus 'k' of the core wihich is about 48 to 50 N/mm$^3$ depending on how it is calculated. This value is only 1/7th of the nearest spool the MB80. Note that the way of calculating is immaterial if the wall thickness is low enough (t < 10×OD) which is the case for the inventive spool.
- Due to the fact that the core OD is large and that the radial modulus k is low in the inventive spool so that the pressure imposed on the core material is much lower than in other prior-art spools the spool does not have to be so overly strong. Therefore in the yield criterion the inventive spool still has a sufficient strength (above 2500 N/mm) to be reusable.

The inventive principle of how the wire pack affects the stresses in the core and the response of the wire pack to the core changes is further illustrated in FIGURES 6 'a' and 'b'. Note that these figures are only illustrations of the working principle of the invention and that the absolute magnitude of the numbers is not binding and only for illustrative purposes. Both graphs show the hoop or circumferential stress (Hoop Stress 'HS' in N/mm$^2$) in ordinate of the wires (open symbols) and in the core material (closed symbols) as layers of wire windings (1, 2, 4, 8, up 12, the layers are 1 mm thick) are put on the spool. In abscissa the radius of the core and wire pack is mentioned ('r' in mm). The inner and outer dimensions of the core have been kept equal for both embodiments.

The wire-pack stress WPS is illustrated with the full line and is in both cases about 800 N/mm$^2$. The wire-pack stress WPS is that stress when regarding the wire pack as a homogeneous layer with wires with a metallic surface A (in mm$^2$) wound at tension T (in N) wherein account has been taken of the free space between the wire windings. E.g. when winding a 148 μm wire with a tension of 25N - resulting in a wire stress of 1453 N/mm$^2$ - and a filling degree of 55% one obtains a WPS of 800 N/mm$^2$.

In the prior-art spool - FIGURE 6 'a' - the stress in the wire-pack remains fairly constant as the core does not give in due to its high k value ('k' was set to 450 N/mm$^3$, thin wall approximation). As the pressure of the wire pack is fully transmitted to the core, the hoop stress in the core increases dramatically as layers are build on each other. This leads to the paradox that in order to reduce the hoop stresses in the core - to prevent plastic deformation of the core material - one must make the core even stronger leading to the heavy, bulky spools in use nowadays.

The inventors took the route as illustrated FIGURE 6 'b' by reducing the 'k' value of the spool (in 'b' the 'k' value was set to 17 N/mm$^3$). In the inventive spool the tension in the wire windings diminishes as more windings are wound on top. This is due to the fact that under pressure, the core gives in and reduces in diameter. As a bonus, the hoop stress in the core material is lower than for the equivalent prior-art spool thereby increasing the reusability of the spool. Note that - close to the core - the wire tension can go negative i.e. the wire goes into compression. Such compression is allowable as long as the wire does not buckle. The limit is about 1000 N/mm$^2$ of compressive stress for the wire envisaged.

From the above it will be clear that not just a spool has been invented but a whole methodology has been disclosed on how a spool should be developed to wind fine wires on at high tension such as a sawing wire.

Table I: comparison with prior-art spools

| Spool ID | OD (in mm) | ID (in mm) | t (in mm) | Spool width (in mm) | Wire-pack thickness (in mm) | Pressure on core (in MPa) | ΔOD (in mm) | k numeric (in N/mm$^3$) | k exact (in N/mm$^3$) | k approximate (in N/mm$^3$) | Yield criterion (in N/mm) |
|---|---|---|---|---|---|---|---|---|---|---|---|
| T8252B | 205 | 90 | 57.5 | 145 | 12.4 | 93,8 | 0.32 | 586 | 580 | 873 | 10757 |
| MB80 | 180 | 120 | 29.9 | 252 | 8.2 | 72,4 | 0.44 | 329 | 336 | 386 | 6478 |
| MB200 | 245 | 70 | 87.5 | 310 | 5.0 | 40.2 | 0.12 | 660 | 651 | 1429 | 14625 |
| TW320 | 236 | 126 | 55.0 | 100 | 15.5 | 96.8 | 0.49 | 395 | 396 | 518 | 10967 |
| TK30 | 120 | 58 | 31.0 | 270 | 11.0 | 117.1 | 0.27 | 867 | 891 | 1247 | 5978 |
| Inv. Spool | 327 | 293 | 17.0 | 336 | 3.5 | 18,9 | 0.78 | 48 | 48 | 50 | 4190 |

EP 2 720 968 B1

13

**Claims**

1. A spool (200, 300, 400)
   suitable for winding fine wire at high tension comprising a tubular core (202, 302, 402) made of a core material for receiving said fine wire on,
   said core material having a modulus of elasticity 'E$_{core}$' expressed in N/mm$^2$,
   said core (202, 302, 402) having an inner diameter 'ID' and an outer diameter 'OD' both expressed in mm,
   **characterised in that**
   said outer diameter OD, said inner diameter ID and said modulus of elasticity E$_{core}$ are such that

$$3 \text{ N/mm}^3 < E_{core} \cdot (2/ID - 2/OD) < 300 \text{ N/mm}^3$$

2. The spool according to claim 1, said core material further having a 0.05% offset yield stress Y$_{core}$ expressed in N/mm$^2$ wherein

$$2400 \text{ N/mm} < Y_{core} \cdot (OD^2 - ID^2)/(4OD)$$

3. The spool according to any one of claims 1 or 2 wherein said outer core diameter OD is larger than 250 mm.

4. The spool according to any one of claims 1 to 3 wherein said core is made of a steel with a modulus of elasticity E$_{core}$ that is larger than 190 000 N/mm$^2$ and a 0.05% offset yield stress Y$_{core}$ that is larger than 350 N/mm$^2$.

5. The spool according to any one of claims 1 to 3 wherein said core (202, 302, 402) is made of an aluminium alloy with a modulus of elasticity E$_{core}$ that is larger than 65 000 N/mm$^2$ and a 0.05% offset yield stress Y$_{core}$ that is larger than 200 N/mm$^2$.

6. The spool according to any one of claims 1 to 5 wherein said spool (200, 300, 400) further comprises at least two supports (210, 310, 410) for supporting said core (202, 302, 402), said supports (210, 310, 410) contacting said core (202, 302, 402) internally, said supports (210, 310, 410) comprising a centre hole (214, 314, 414) for rotatably mounting said spool (200, 300, 400) and radial elastic components (212, 312, 412) between said centre hole (214, 314, 414) and said core (202, 302, 402).

7. The spool according to claim 6 wherein the outer diameter reduction of said core (202, 302, 402) at said supports (210, 310, 410) is substantially equal to the outer diameter reduction of said core (202, 302, 402) in between said supports (210, 310, 410), said outer diameter reduction being measured at the design load of the spool.

8. The spool according to any one of claims 6 or 7 wherein less core material is present at said supports (210, 310, 410) than there is core material present in between said supports (210, 310, 410).

9. The spool according to claim 8 wherein said core (202, 302, 402) further has a thickness, wherein the thickness of said core (202,302,402) is less at said supports (210, 310, 410) than in between said supports (210, 310, 410).

10. A method to design a sawing wire spool (200, 300, 400) comprising a coil of wire wound on the core (202, 302, 402) of said spool comprising the steps of:

    - selecting a core material for said core (202, 302, 402) having a modulus of elasticity 'Ecore' expressed in N/mm$^2$;
    - selecting a core (202, 302, 402) with an inner diameter 'ID' and an outer diameter 'OD' expressed in mm

    **characterised in that** the selection is such that

$$3 \text{ N/mm}^3 < E_{core} \cdot (2/ID - 2/OD) < 300 \text{ N/mm}^3$$

**11.** The method according claim 10 further comprising the step of selecting a core material with a 0.05% offset yield stress $Y_{core}$ expressed in $N/mm^2$ wherein

$$2400 \text{ N/mm} < Y_{core} \cdot (OD^2 - ID^2)/(4OD)$$

**12.** The method according to any one of claim 10 or 11 wherein said outer diameter 'OD' is larger than 250 mm.

**Patentansprüche**

**1.** Spule (200, 300, 400),
die zum Aufwickeln eines dünnen Drahtes mit einer hohen Spannung geeignet ist und die einen röhrenförmigen Kern (202, 302, 402) umfasst, der aus einem Kernmaterial hergestellt ist, um den dünnen Draht darauf aufzunehmen, wobei das Kernmaterial einen Elastizitätsmodual 'E$_{core}$' besitzt, der in $N/mm^2$ ausgedrückt wird, wobei der Kern (202, 302, 402) einen inneren Durchmesser 'ID' und einen äußeren Durchmesser 'OD' besitzt, die beide in mm ausgedrückt werden,
**dadurch gekennzeichnet, dass**
der äußere Durchmesser OD, der innere Durchmesser ID und der Elastizitätsmodul E$_{core}$ derart sind, dass

$$3 \text{ N/mm}^3 < E_{core} \cdot (2/ID - 2/OD) < 300 \text{ N/mm}^3.$$

**2.** Spule nach Anspruch 1, wobei das Kernmaterial ferner eine 0,05 %-Dehngrenze $Y_{core}$ besitzt, die in $N/mm^2$ ausgedrückt wird, wobei

$$2400 \text{ N/mm} < Y_{core} \cdot (OD^2 - ID^2)/(4OD).$$

**3.** Spule nach einem der Ansprüche 1 oder 2, wobei der äußere Kerndurchmesser OD größer als 250 mm ist.

**4.** Spule nach einem der Ansprüche 1 bis 3, wobei der Kern aus einem Stahl mit einem Elastizitätsmodul E$_{core}$, der größer als 190000 $N/mm^2$ ist, und einer 0,05 %-Dehngrenze $Y_{core}$, die größer als 350 $N/mm^2$ ist, hergestellt ist.

**5.** Spule nach einem der Ansprüche 1 bis 3, wobei der Kern (202, 302, 402) aus einer Aluminiumlegierung mit einem Elastizitätsmodul E$_{core}$, der größer als 65000 $N/mm^2$ ist, und einer 0,05 %-Dehngrenze $Y_{core}$, die größer als 200 $N/mm^2$ ist, hergestellt ist.

**6.** Spule nach einem der Ansprüche 1 bis 5, wobei die Spule (200, 300, 400) ferner mindestens zwei Tragelemente (210, 310, 410) zum Tragen des Kerns (202, 302, 402) umfasst, wobei die Tragelemente (210, 310, 410) den Kern (202, 302, 402) innen berühren, wobei die Tragelemente (210, 310, 410) ein mittleres Loch (214, 314, 414) zum drehenden Befestigen der Spule (200, 300, 400) und radiale elastische Komponenten (212, 312, 412) zwischen dem mittleren Loch (214, 314, 414) und dem Kern (202, 302, 402) umfassen.

**7.** Spule nach Anspruch 6, wobei die Verringerung des äußeren Durchmessers des Kerns (202, 302, 402) an den Tragelementen (210, 310, 410) im Wesentlichen gleich der Verringerung des äußeren Durchmessers des Kerns (202, 302, 402) zwischen den Tragelementen (210, 310, 410) ist, wobei die Verringerung des äußeren Durchmessers bei der Entwurfslast der Spule gemessen wird.

**8.** Spule nach einem der Ansprüche 6 oder 7, wobei weniger Kernmaterial an den Tragelementen (210, 310, 410) vorhanden ist als Kernmaterial zwischen den Tragelementen (210, 310, 410) vorhanden ist.

**9.** Spule nach Anspruch 8, wobei der Kern (202, 302, 402) ferner eine Dicke besitzt, wobei die Dicke des Kerns (202, 302, 402) an den Tragelementen (210, 310, 410) weniger als zwischen den Tragelementen (210, 310, 410) beträgt.

**10.** Verfahren, eine Sägedrahtspule (200, 300, 400), die um den Kern (202, 302, 402) der Spule gewickelte Wicklungen aus Draht umfasst, zu gestalten, das die folgenden Schritte umfasst:

- Auswählen eines Kernmaterials für den Kern (202, 302, 402) mit einem Elastizitätsmodul 'E$_{core}$', der in N/mm$^2$ ausgedrückt wird;
- Auswählen eines Kerns (202, 302, 402) mit einem inneren Durchmesser 'ID' und einem äußeren Durchmesser 'OD', die in mm ausgedrückt werden,
**dadurch gekennzeichnet, dass** die Auswahl so ist, dass

$$3\ \text{N/mm}^3\ <\ \text{E}_{core} \cdot (2/\text{ID}-2/\text{OD})\ <\ 300\ \text{N/mm}^3.$$

**11.** Verfahren nach Anspruch 10, das ferner den Schritt umfasst, ein Kernmaterial mit einer 0,05 %-Dehngrenze Y$_{core}$, die in N/mm$^2$ ausgedrückt wird, auszuwählen, wobei

$$2400\ \text{N/mm}\ <\ \text{Y}_{core} \cdot (\text{OD}^2-\text{ID}^2)/(4\text{OD}).$$

**12.** Verfahren nach einem des Anspruchs 10 oder 11, wobei der äußere Durchmesser 'OD' größer als 250 mm ist.

## Revendications

**1.** Bobine (200, 300, 400) appropriée pour l'enroulement d'un fil fin à une tension élevée, comprenant une âme tubulaire (202, 302, 402) constituée d'un matériau d'âme destiné à recevoir ledit fil fin sur celui-ci, ledit matériau d'âme présentant un module d'élasticité 'E$_{core}$' exprimé en N/mm$^2$, ladite âme (202, 302, 402) présentant un diamètre intérieur 'ID' et un diamètre extérieur 'OD', tous les deux exprimés en mm, **caractérisé en ce que** ledit diamètre extérieur OD, ledit diamètre intérieur ID et ledit module d'élasticité E$_{core}$ sont tels que:

$$3\ \text{N/mm}^3\ <\ \text{E}_{core}\ .(2/\text{ID}-2/\text{OD})\ <\ 300\ \text{N/mm}^3.$$

**2.** Bobine selon la revendication 1, dans laquelle ledit matériau d'âme présente en outre une limite de proportionnalité Y$_{core}$ à 0,05 % exprimée en N/mm$^2$, dans laquelle:

$$2400\ \text{N/mm}^3\ <\ \text{Y}_{core}(\text{OD}^2-\text{ID}^2)/(4\text{OD}).$$

**3.** Bobine selon l'une quelconque des revendications 1 ou 2, dans laquelle ledit diamètre extérieur OD de l'âme est supérieur à 250 mm.

**4.** Bobine selon l'une quelconque des revendications 1 à 3, dans laquelle ladite âme est constituée d'acier présentant un module d'élasticité E$_{core}$ qui est supérieur à 190 000 N/mm$^2$, et une limite de proportionnalité Y$_{core}$ à 0,05 % qui est supérieure à 350 N/mm$^2$.

**5.** Bobine selon l'une quelconque des revendications 1 à 3, dans laquelle ladite âme (202, 302, 402) est constituée d'un alliage d'aluminium présentant un module d'élasticité E$_{core}$ qui est supérieur à 65 000 N/mm$^2$, et une limite de proportionnalité Y$_{core}$ à 0,05 % qui est supérieure à 200 N/mm$^2$.

**6.** Bobine selon l'une quelconque des revendications 1 à 5, dans laquelle ladite bobine (200, 300, 400) comprend en outre au moins deux supports (210, 310, 410) pour supporter ladite âme (202, 302, 402), lesdits supports (210, 310, 410) entrant en contact avec ladite âme (202, 302, 402) intérieurement, lesdits supports (210, 310, 410) comportant un trou central (214, 314, 414) pour le montage rotatif de ladite bobine (200, 300, 400) et de composants élastiques radiaux (212, 312, 412) entre ledit trou central (214, 314, 414) et ladite âme (202, 302, 402).

**7.** Bobine selon la revendication 6, dans laquelle la réduction du diamètre extérieur de ladite âme (202, 302, 402) à l'endroit desdits supports (210, 310, 410) est sensiblement égale à la réduction du diamètre extérieur de ladite âme (202, 302, 402) entre lesdits supports (210, 310, 410), ladite réduction du diamètre extérieur étant mesurée à la charge théorique de la bobine.

8. Bobine selon l'une quelconque des revendications 6 ou 7, dans laquelle le matériau d'âme présent à l'endroit desdits supports (210, 310, 410) est moins important que le matériau d'âme présent entre lesdits supports (210, 310, 410).

9. Bobine selon la revendication 8, dans laquelle ladite âme (202, 302, 402) présente en outre une épaisseur, dans laquelle l'épaisseur de ladite âme (202, 302, 402) est plus petite à l'endroit desdits supports (210, 310, 410) qu'entre lesdits supports (210, 310, 410).

10. Procédé pour concevoir une bobine de fil de sciage (200, 300, 400) comprenant un enroulement de fil enroulé sur l'âme (202, 302, 402) de ladite bobine, comprenant les étapes suivantes:

   - sélectionner un matériau d'âme pour ladite âme (202, 302, 402) présentant un module d'élasticité '$E_{core}$' exprimé en N/mm$^2$; et
   - sélectionner une âme (202, 302, 402) présentant un diamètre intérieur 'ID' et un diamètre extérieur 'OD' exprimés en mm, **caractérisé en ce que** la sélection est telle que:

$$3 \ \text{N/mm}^3 \ < \ E_{core} \cdot (2/ID-2/OD) \ < \ 300 \ \text{N/mm}^3 .$$

11. Procédé selon la revendication 10, comprenant en outre l'étape de sélection d'un matériau d'âme présentant une limite de proportionnalité $Y_{core}$ à 0,05 % exprimée en N/mm$^2$, dans laquelle:

$$2400 \ \text{N/mm}^3 \ < \ Y_{core}(OD^2-ID^2)/(4OD) .$$

12. Procédé selon l'une quelconque des revendications 10 ou 11, dans lequel ledit diamètre extérieur 'OD' est supérieur à 250 mm.

Fig. 1a

Fig. 1b

Fig. 2a

Fig. 2b

EP 2 720 968 B1

300

304

310

302

314

312

Fig. 3a

304

320

302

312

313

310

314

Fig. 3b

400

412

404

402

414

410

Fig. 4a

412

410

414

Fig. 4b

Fig. 5

Fig. 6a    Prior Art

Fig. 6b

**EP 2 720 968 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19828420
- WO 2011035907 A
- WO 2009077282 A
- US D399857 S
- WO 2009080750 A
- EP 1698433 A1
- EP 1419986 A